# EUROPEAN PATENT SPECIFICATION

(11) **EP 2 597 020 B1**
(45) Date of publication and mention of the grant of the patent: **27.02.2019**
(21) Application number: 11809638.7
(22) Date of filing: 19.07.2011
(51) Int. Cl.: B62J 37/00, B62J 35/00, B62K 19/46

(54) **SCOOTER TYPE MOTORCYCLE**
ROLLERARTIGES MOTORRAD
MOTOCYCLE DU TYPE SCOOTER

(30) Priority: 20.07.2010 JP 2010162930
(43) Date of publication of application: 29.05.2013
(73) Proprietor: Suzuki Motor Corporation, Shizuoka 432-8611 (JP)
(72) Inventor: OURA, Kosei, Shizuoka-Ken 432-8611 (JP)
(74) Representative: Klunker IP Patentanwälte PartG mbB
(86) International application number: PCT/JP2011/066362
(87) International publication number: WO 2012/011468

(56) References cited:
- WO-A1-2010/013479
- JP-A- 4 372 484
- JP-A- H04 353 257
- JP-A- H04 372 484
- JP-A- 2002 284 070
- JP-A- 2002 284 070
- JP-A- 2003 182 674
- JP-A- 2003 246 287
- JP-A- 2010 155 506
- US-A1- 2010 163 328

## Description

### Technical Field

The present invention relates to a scooter-type motorcycle according to the preamble of claim 1. It is provided with a canister that can temporarily collect a fuel evaporative gas generated in a fuel tank and supply the fuel evaporative gas to an engine side so as to enable control of the fuel evaporative gas.

### Background

In conventional fuel tanks for motorcycles, a stored fuel may be evaporated and remain as a fuel evaporative gas in an upper portion within the fuel tank. In such viewpoint, there has been known a technique of controlling a fuel evaporative gas by guiding the fuel evaporative gas to a canister, temporarily collecting the fuel evaporative gas in the canister, and supplying the fuel evaporative gas in the canister to an engine side when the engine is started so as to prevent the fuel evaporative gas from leaking into the atmosphere during shutdown of the engine.

As one example of such device as described above, Patent Document 1 discloses a scooter-type motorcycle with a fuel
evaporative gas control device, in which a storage box is arranged below a seat, an engine unit is arranged below the storage box, a fuel tank is disposed at a vehicle lower portion in front of the engine unit, and a canister is arranged behind the storage box to constitute the fuel evaporative gas control device.

US 2010/0163328 A1 discloses a scooter-type motorcycle in accordance with the preamble of claim 1. The canister is provided at a position obliquely below a front seat hinge the longitudinal direction of the canister extends in the width direction of the vehicle.

### Prior Art Document

### Patent Document

Patent Document 1: Japanese Patent Laid-Open Publication No. 10-324281
Patent Document 2: US 2010/0163328 A1

### Description of Invention

### Problem to be solved by Invention

However, the fuel evaporative gas control device disclosed in Patent Literature 1 involves an inconvenience such that since it is required to take a large space for arranging a long connection pipe connecting the fuel tank and the canister, and a long connection pipe connecting the canister and an air-fuel mixture supply device (a carburetor), a vehicle weight and a vehicle cost are inevitably increased.

Since according to Patent Document 2 the length extension of a canister is limited by the structure of the vehicle at the position where the canister is mounted, the length of the canister can be extended somewhat due to the inclination of the longitudinal direction of the canister with respect to the vehicle width direction.

In consideration of the above circumstances, it is an object of the present invention to provide a scooter-type motorcycle which enables control of a fuel evaporative gas by shortening both of a connection pipe connecting a canister that temporarily collects and supplies the fuel evaporative gas, and a fuel tank, and a connection pipe connecting the canister and an air-fuel mixture supply device.

### Means for solving Problem

The present invention provides a scooter-type motorcycle, having the features of claim 1.

### Effects of Invention

In accordance with the scooter-type motorcycle according to a preferred embodiment of the present invention, since the canister is arranged between the fuel tank and an air-fuel mixture supply device arranged adjacent to the cylinder assembly of the engine, both of a connection pipe connecting the fuel tank and the canister, and a connection pipe
connecting the canister and the air-fuel mixture supply device can be shortened.

### Brief Description of Drawings

[Fig. 1] is a left side view illustrating one embodiment of a scooter-type motorcycle which enables control of a fuel evaporative gas according to the present invention.
[Fig. 2] is a left side view illustrating a schematic arrangement structure of a vehicle body frame of the scooter-type motorcycle in Fig. 1, and an engine, a canister, or the like mounted to the vehicle body frame.
[Fig. 3] is an enlarged perspective view illustrating an area around the canister in Fig. 2 viewed from a diagonally left backward side.
[Fig. 4] is a perspective view of the area in Fig. 3 from which the vehicle body frame, an air cleaner, or the like are removed.
[Fig. 5] is an enlarged perspective view of the canister, a fuel tank, an air-fuel mixture supply device, or the like in Figs. 3 and 4 as viewed from a diagonally left backward side.
[Fig. 6] is a perspective view of the canister, the fuel tank, the air-fuel mixture supply device, or the like in Figs. 3 and 4 as viewed from a diagonally right backward side. Best Mode for embodying Invention

Hereunder, a best mode for carrying out the present invention will be described based on the drawings. However, the present invention is with reference to the accompanying drawings.

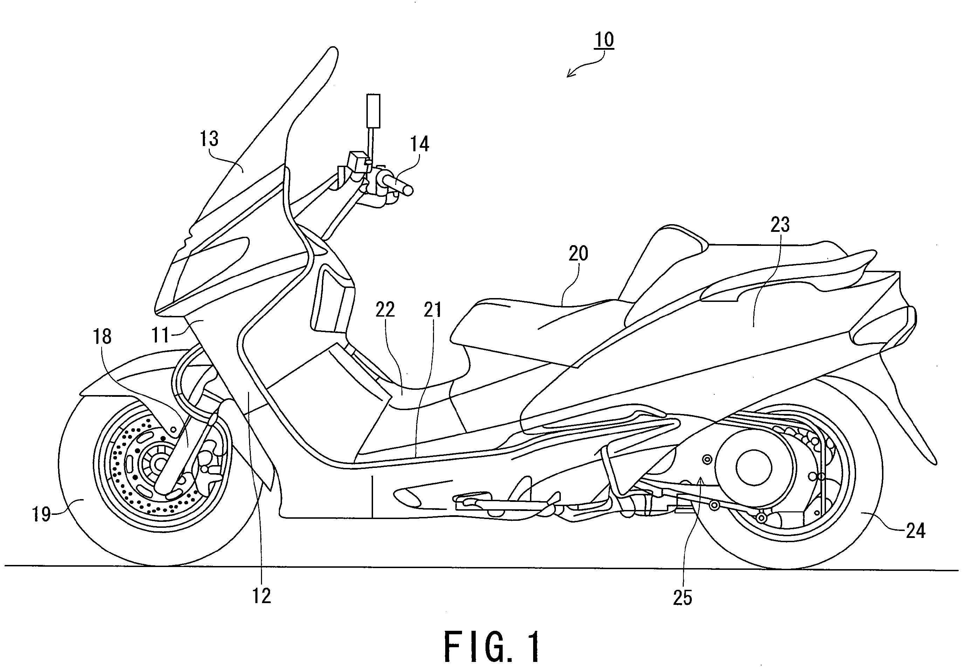

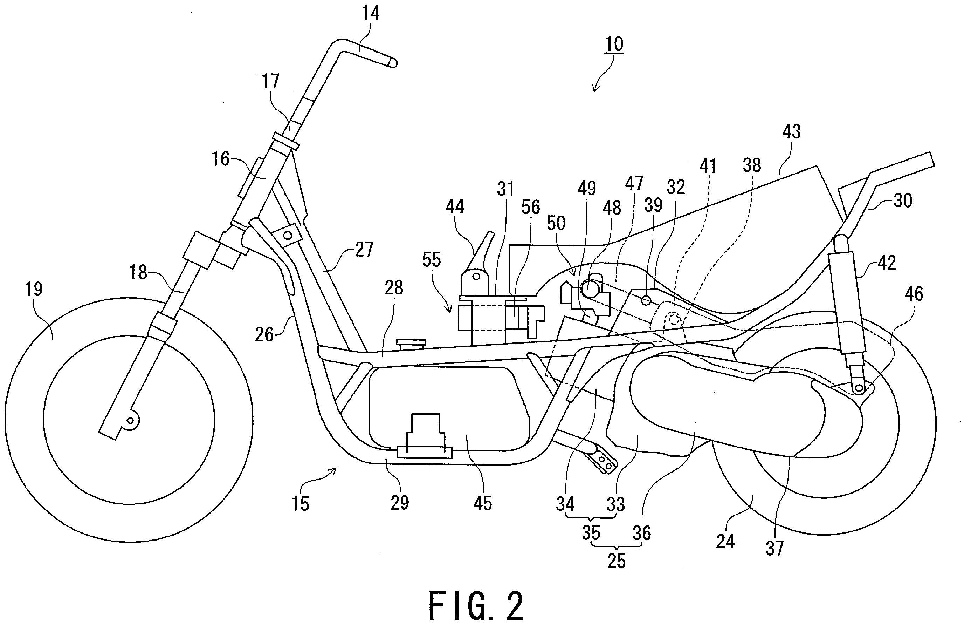

Fig. 1 is a left side view of a scooter-type motorcycle according to one embodiment of the present invention. Fig. 2 is a left side view illustrating a vehicle body frame of the scooter-type motorcycle in Fig. 1, and an engine, a canister, or the like mounted to the vehicle body frame. In the one embodiment, terms of front, rear, right, left, upper, and lower are based on a driver who rides on a vehicle.

A scooter-type motorcycle 10 according to the present embodiment is a large two-seater (two-seated) scooter. The scooter-type motorcycle 10 includes a leg shield 12 that projects to right and left sides, a screen 13 and a handle bar 14 at a vehicle body front portion 11.

The handle bar 14 is coupled to a steering shaft 17 in an integrally rotatable manner. The steering shaft 17 is pivotally supported on a head pipe 16 of a vehicle body frame 15 in Fig. 2. A front wheel 19 is suspended from the steering shaft 17 via a pair of right and left front forks 18. The steering shaft 17 is pivotally supported on the head pipe 16 so as to be freely turned to the right and left. The front wheel 19 is turned to the right and left by operating the handle bar 14.

As shown in Fig. 1, a two-seater double seat 20 is arranged behind the vehicle body front portion 11 in the scooter-type motorcycle 10. A right and left pair of plate-like foot boards 21, on which an occupant (a driver, a passenger) seated on the double seat 20 can place both feet, are provided so as to extend in a region from the vehicle body front portion 11 to the double seat 20. A center tunnel 22 that bulges upward is also formed between the foot boards 21.

A rear portion cover 23 that covers a rear portion of a vehicle body is also provided below the double seat 20. A unit swing-type engine unit 25 that drives a rear wheel 24 is mounted to the vehicle body frame 15 shown in Fig. 2 below the rear portion cover 23 in a vertically swingable manner.

The vehicle body frame 15 includes the head pipe 16 at a front end portion. A pair of right and left down tubes 26 and 27 extend downwardly respectively from a lower portion and an upper portion of the head pipe 16. The down tube 26 on a front side (Fig. 2) is backwardly bent at a lower portion, and a pair of right and left of lower tubes 29 are connected to a lower end portion of the down tube 26. A pair of right and left of main tubes 28 are also provided so as to extend backwardly from a substantially vertical center position of the down tube 26 on the front side. A lower end portion of the down tube 27 on a rear side is connected to the main tubes 28. Rear end portions of the lower tubes 29 are also connected to the main tubes 28. Furthermore, a seat rail 30 is connected to rear end portions of the main tubes 28.

A plurality of bridges are also formed between the paired right and left main tubes 28 which are disposed apart from each other in a vehicle width direction. Among the plurality of bridges, a support bridge 31 is located on a front side, and a suspension bridge 32 is located on a rear side.

The engine unit 25 is composed of an engine 35 having an engine case (a crankcase) 33 and a cylinder assembly 34, and a power transmission device 36 integrated with the engine 35. A crankshaft, not shown, is disposed in the engine case (the crankcase) 33. The cylinder assembly 34 is provided so as to extend forward from the crankcase 33 in a substantially horizontal direction. The cylinder assembly 34 is composed of a cylinder, a cylinder head, and a head cover, not shown, which are sequentially stacked from the engine case 33.

The power transmission device 36 is formed by incorporating a power transmission mechanism, not shown, in a transmission case 37. The transmission case 37 is disposed to the left side of the engine case 33 of the engine 35 so as to extend backwardly. A rotational force of the crankshaft in the engine 35 is converted into a speed by the power transmission device 36 and the power is then transmitted to the rear wheel 24.

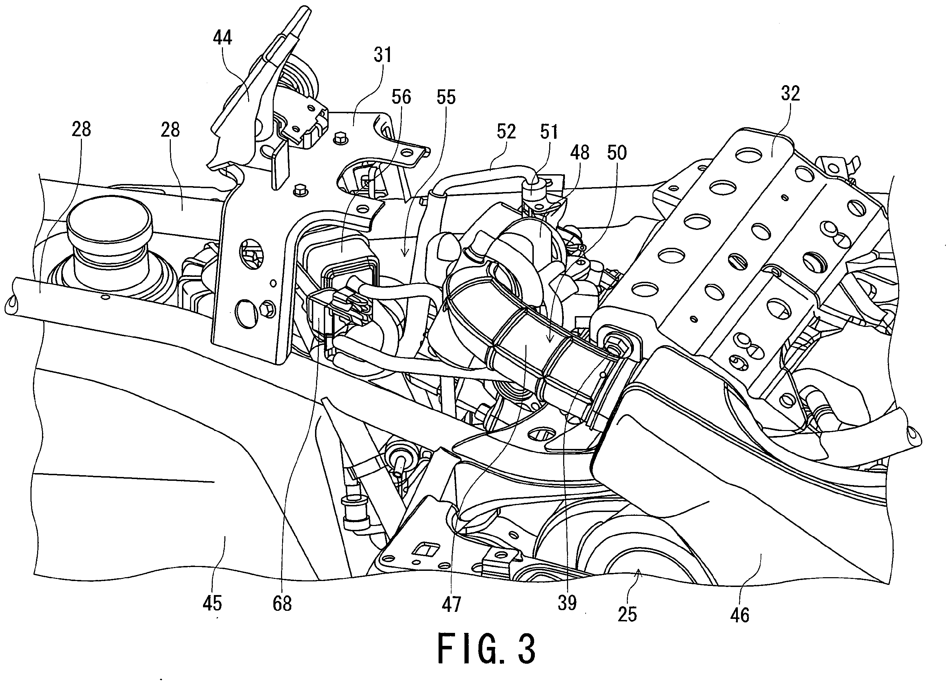

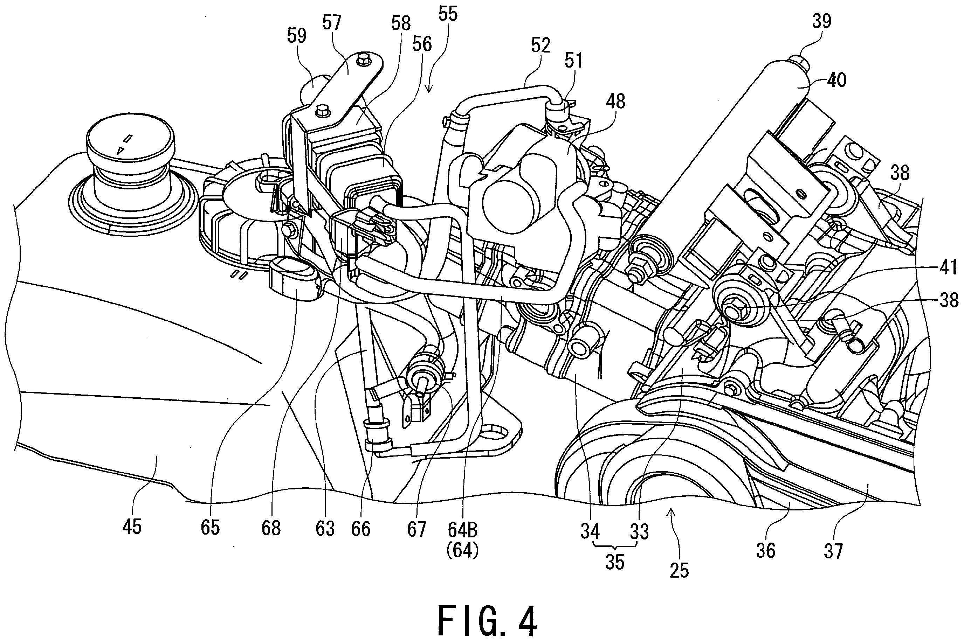

A pair of right and left bearing boss portions 38 are provided so as to project upwardly as shown in Fig. 4 on an upper portion of the engine case 33. The suspension bridge 32 of the vehicle body frame 15 has a box shape opened to a lower side as shown in Fig. 3. An engine suspension bracket 40 is pivotally supported on the suspension bridge 32 by means of an engine suspension bolt 39 on an inner side of the suspension bridge 32 as shown in Figs. 2, 3 and 4. The bearing boss portions 38 of the engine unit 25 are rotatably coupled to the engine suspension bracket 40 by a pivot shaft 41. As described above, the engine unit 25 is supported about the pivot shaft 41 provided on the upper portion of the engine unit 25 in a vertically swingable manner with respect to the vehicle body frame 15.

A reaction unit 42 is also vertically suspended between a rear end of the engine unit 25 and the seat rail 30 as shown in Fig. 2. The reaction unit 42 buffers the vertical swing of the engine unit 25 and the rear wheel 24. The engine unit 25 and the rear wheel 24 are thereby suspended.

The support bridge 31 is located in front of the cylinder assembly 34 of the engine 35, and the suspension bridge 32 is arranged immediately above the engine case 33 of the engine 35 at the main tubes 28 of the vehicle body frame 15.

An article storage box 43, which can store an article such as a helmet, is mounted to upper surfaces of the support bridge 31 and the suspension bridge 32. The double seat 20 shown in Fig. 1 is arranged above the article storage box 43. A distal end of the double seat 20 is supported by a seat hinge 44 so that the double seat 20 can be opened and closed. The seat hinge 44 is placed at the support bridge 31 (Fig. 2) and acts as a seat support member. Therefore, when the double seat 20 is closed, a bottom plate of the double seat 20 closes an upper opening portion of the storage box 43 arranged below the double seat 20.

The engine unit 25 is arranged at a vehicle body lower portion below the article storage box 43, and a fuel tank 45 that stores a fuel is arranged between the main tubes 28 and the lower tubes 29 of the vehicle body frame 15 at the vehicle lower portion in front of the engine unit 25. The fuel tank 45 is accommodated in the center tunnel 22 shown in Fig. 1.

As shown in Fig. 2, an engine intake system 50 including an air cleaner 46, an outlet pipe 47, an air-fuel mixture supply device 48, and an intake pipe 49 is arranged above the engine unit 25 and under the article storage box 43. The air cleaner 46 is mounted to the engine case 33 and the transmission case 37 of the engine unit 25. The air cleaner 46 introduces outside air and removes dust or the like in the outside air to thereby obtain clean air.

The air-fuel mixture supply device 48 is arranged above the cylinder assembly 34 of the engine unit 25 and close to a front side of the pivot shaft 41 of the engine unit 25 in the vehicle side view. The air-fuel mixture supply device 48 is connected to the air cleaner 46 via the outlet pipe 47 and also connected to an intake port of the cylinder head of the cylinder assembly 34 via the intake pipe 49.

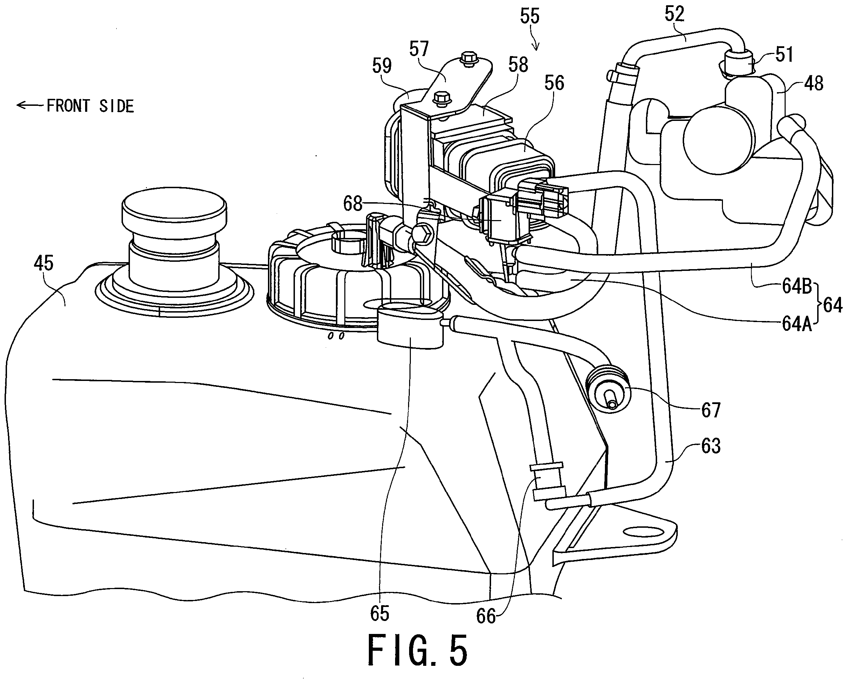

The air-fuel mixture supply device 48 is composed of, for example, a throttle body, and includes a fuel injector 51 as shown in Figs. 4 and 5. The fuel injector 51 is connected to the fuel tank 45 via a fuel hose 52. The air-fuel mixture supply device 48 injects the fuel from the fuel injector 51 into the clean air introduced from the air cleaner 46 to obtain an air-fuel mixture, and then, the air-fuel mixture is supplied to the intake port of the cylinder head through the intake pipe 49.

As shown in Fig. 2, an exhaust pipe is connected to an exhaust port (both not shown in Fig. 2) of the cylinder head of the cylinder assembly 34 at a portion below the cylinder assembly 34 of the engine unit 25. The exhaust pipe extends backwardly to be connected to a muffler, not shown. The exhaust pipe and the muffler constitute an engine exhaust system. The engine exhaust system and the above engine intake system 50 are provided in a manner of being vertically swingable about the pivot shaft 41 together with the engine unit 25.

In the fuel tank 45, the fuel is evaporated, and the evaporated gas may remain in an upper portion within the fuel tank 45 particularly during the shutdown period of the engine 35.

In order deal with such phenomenon, according to the present embodiment, the fuel evaporative gas in the fuel tank 45 is temporarily collected by a canister 56 constituting a fuel evaporative gas control device 55, and is supplied to the cylinder assembly 34 (that is, the intake port of the cylinder head of the cylinder assembly 34) through the air-fuel mixture supply device 48 during operation of the engine 35.

That is, as shown in Figs. 2 to 4, in the motorcycle according to the present embodiment, the canister 56 is arranged at substantially the same height level as that of the air-fuel mixture supply device 48 in front of the cylinder assembly 34 of the engine 35 and above the rear portion of the fuel tank 45.

More specifically, the canister 56 is mounted, by a mounting bracket 57 and an elastic body 58, to a lower surface of the support bridge 31 having a box shape that opens to the lower side so that the canister 56 is housed in the support bridge 31.

The elastic body 58 supports the canister 56 housed in the support bridge 31 in a floating state. The canister 56 is arranged within the rear portion cover 23 or the center tunnel 22 shown in Fig. 1 when the canister 56 is mounted to the support bridge 31. The canister 56 is placed diagonally with respect to the vehicle width direction with a front portion being oriented to a vehicle outer side and a rear portion being oriented to a vehicle inner side as shown in Figs. 3 and 4.

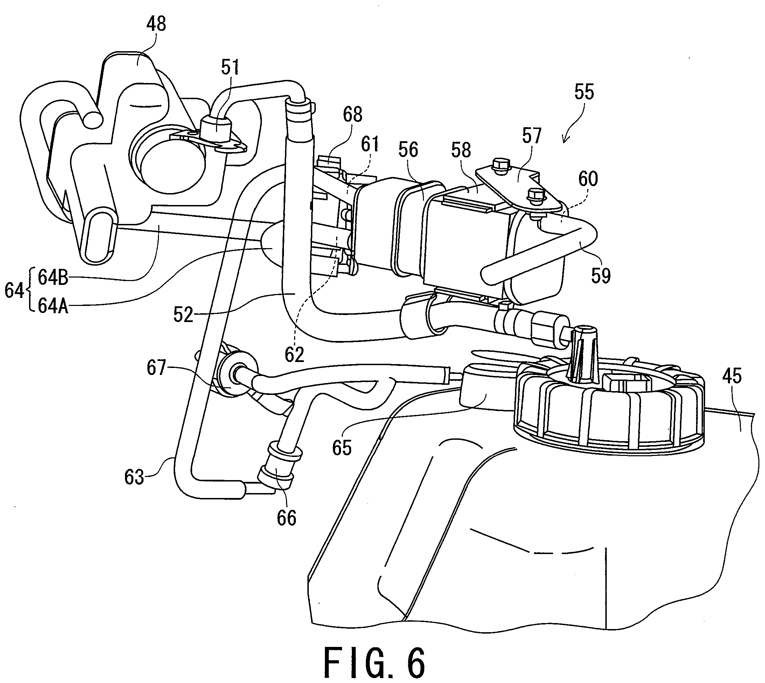

Further, an atmosphere port (outside air introduction port) 60 is provided at the front portion of the canister 56. An atmosphere introduction hose 59 (Fig. 6) is connected to the atmosphere port 60. The atmosphere port 60 opens to the atmosphere through the atmosphere introduction hose 59 to thereby introduce the atmosphere into the canister 56. The canister 56 is also provided with a tank port 61 and a purge port 62 at the rear portion of the canister 56. The fuel evaporative gas from the fuel tank 45 is introduced through the tank port 61.

The fuel evaporative gas is released to the air-fuel mixture supply device 48 through the purge port 62. The tank port 61 is connected to the fuel tank 45 via a collection hose 63 as a connection pipe. The purge port 62 is connected to the air-fuel mixture supply device 48 via a supply hose 64 as a connection pipe.

That is, a vapor separator 65 that performs vapor-liquid separation is disposed on an upper surface of the fuel tank 45. The fuel evaporative gas in the fuel tank 45 is introduced into the collection hose 63. The collection hose 63 branches into two hoses. One of the branch hoses is provided with a roll-over valve 66, and is connected to the tank port 61 of the canister 56. A check valve 67 is provided at the other one of the branch hoses. The check valve 67 opens to the atmosphere on an outlet side. The check valve 67 is opened when a pressure in the fuel tank 45 reaches a predetermined pressure or more to thereby prevent the pressure from becoming excessive. The roll-over valve 66 is closed when, for example, the vehicle falls over to thereby prevent the fuel (a liquid) in the fuel tank 45 from flowing into the canister 56.

The supply hose 64 includes a first supply hose 64A and a second supply hose 64B as shown in Figs. 5 and 6. The first supply hose 64A connects the purge port 62 and a purge valve 68 of the canister 56. The second supply hose 64B connects the purge valve 68 and the air-fuel mixture supply device 48. An opening degree of the purge valve 68 is adjusted according to an operating state of the engine 35. The purge valve 68 thereby controls a flow rate of the fuel evaporative gas released from the canister 56 and supplied to the air-fuel mixture supply device 48.

The fuel evaporative gas generated in the fuel tank 45 is guided into the canister 56 through the collection hose 63, and is adsorbed and temporarily collected by an adsorbent such as activated carbon disposed in the canister 56. Thereafter, when the opening degree of the purge valve 68 is adjusted according to the operating state of the engine 35 (e.g., start-up of the engine 35), the fuel evaporative gas adsorbed by the adsorbent in the canister 56 is suctioned and supplied into the air-fuel mixture supply device 48 through the purge valve 68 and the supply hose 64 (the first supply hose 64A and the second supply hose 64B) due to action of a negative pressure generated in the intake pipe 49 (Fig. 2). The fuel evaporative gas is thereby used for combustion in the engine 35. The suction of the fuel evaporative gas into the air-fuel mixture supply device 48 is facilitated by introducing the atmosphere into the atmosphere port 60 of the canister 56.

According to the characteristic structures and features of the present embodiment, the following advantageous effects (1) to (4) will be achieved.
(1) Since the canister 56 is arranged in front of the cylinder assembly 34 of the engine 35 and above the rear portion of the fuel tank 45, the canister 56 is arranged between the fuel tank 45 and the air-fuel mixture supply device 48 arranged adjacent to the cylinder assembly 34 of the engine 35. Thus, both the collection hose 63 connecting the fuel tank 45 and the canister 56, and the supply hose 64 connecting the canister 56 and the air-fuel mixture supply device 48 can be shortened. As a result, a space required for arranging the pipes can be narrowed, and hence, the scooter-type motorcycle 10 can be reduced in weight and cost.
(2) Since the canister 56 is arranged on the lower surface of the support bridge 31, which is formed between the pair of main tubes 28 provided apart from each other in the vehicle width direction, in a state in which the canister 56 is housed in the support bridge 31, the space within the support bridge 31 can be effectively used as a space for arranging the canister 56 within the support bridge. Therefore, the canister 56 can be arranged without changing the size of the scooter-type motorcycle 10.
(3) The canister 56 is mounted to the lower surface of the support bridge 31 located between the pair of main tubes 28 provided apart from each other in the vehicle width direction, and the support bridge 31 is disposed at a substantially longitudinal center position of the scooter-type motorcycle 10. As a result, a heavy object or member such as the canister 56 can be arranged close to a center of gravity of the scooter-type motorcycle 10, and accordingly, even in an additional provision of the canister 56 to the scooter-type motorcycle, for example, there is less affected to the vehicle motion performance.
(4) Since the air-fuel mixture supply device 48 connected to the canister 56 via the supply hose 64 is arranged close to the front side of the pivot shaft 41 of the engine unit 25 in the vehicle side view, a vibration amount (a swing amount) of the air-fuel mixture supply device 48 can be reduced. Moreover, since the canister 56 is arranged at substantially the same height level as that of the air-fuel mixture supply device 48, the length of the supply hose 64 can be shortened. As a result, looseness of the supply hose 64 can be minimized, and the space for arranging the supply hose 64 can be further reduced.

It is further to be noted that although the present invention has been described hereinabove with reference to the embodiment, the present invention is not limited thereto. For example, although it is described that the canister 56 is located on the lower surface of the support bridge 31, the canister 56 may be located on an upper surface, an outer side surface, or an inner side surface of the support bridge 31. In addition, although it is also described that the air-fuel mixture supply device 48 is arranged above the cylinder assembly 34 of the engine 35, the air-fuel mixture supply device 48 may be arranged on the side of or under the cylinder assembly 34. Reference Numeral
- 10: scooter-type motorcycle
- 15: vehicle body frame
- 20: double-seat
- 25: engine unit
- 28: main tube
- 31: support bridge
- 34: cylinder assembly
- 35: engine
- 36: power transmission device
- 41: pivot shaft
- 43: article storage box
- 44: seat hinge
- 45: fuel tank
- 48: air-fuel mixture supply device
- 55: fuel evaporation gas control device
- 56: canister
- 63: collection hose (connecting pipe)
- 64: supply hose (connection pipe)

## Claims

1. A scooter-type motorcycle (10) in which a storage box (43) that stores an article is disposed under a seat (20), a unit swing-type engine unit (25) having an engine (35) and a power transmission device (36) integrated with each other is mounted at a vehicle lower portion below the article storage box (43), and a fuel tank (45) is disposed at the vehicle lower portion in front of the engine unit (25), and a canister (56), that temporarily collects a fuel evaporative gas generated in the fuel tank (45) and then supplies the collected fuel evaporative gas to a cylinder assembly (34) side constituting a part of the engine (25), is disposed to thereby control the fuel evaporative gas wherein the canister (56) is arranged in front of the cylinder assembly (34) and above a rear portion of the fuel tank (45), **characterized in that** a bridge member (31) is disposed so as to bridge between a pair of frame pipes (28) provided apart from each other in a vehicle width direction and to support on an upper surface thereof a seat hinge (44) as a seat support member supporting a front end portion of the seat (20), and the canister (56) is mounted to a lower surface of the bridge member (31).

2. The scooter-type motorcycle (10) according to claim 1, wherein the bridge member (31) has a box shape that opens to the lower side, and the canister (56) is mounted to a lower surface of the bridge member (31) in a state in which the canister (56) is housed within the bridge member (31).

3. The scooter-type motorcycle (10) according to claim 2, wherein the article storage box (43) and the seat support member are mounted to an upper surface of the bridge member (31).

4. The scooter-type motorcycle (10) according to claim 1, wherein the cylinder assembly (34) of the engine (35) extends forward from an engine case (33) in a substantially horizontal direction, and air-fuel mixture supply device (48) that supplies an air-fuel mixture to the cylinder assembly (34) is arranged above the cylinder assembly (34), and the canister (56) is connected to both the air-fuel mixture supply device (48) and the fuel tank (45).

5. The scooter-type motorcycle according to claim 4, wherein the engine unit (25) is suspended in a vertically swingable manner about a pivot shaft (41) that is provided on an upper portion of the engine case (33), the air-fuel mixture supply device (48) is arranged close to a front side of the pivot shaft (41) in a vehicle side view, and the canister (56) is arranged at a substantially same height level as that the air-fuel mixture supply device (48).

## Patentansprüche

1. Motorroller (10), bei dem ein zum Aufnehmen eines Gegenstands dienender Gepäckkasten (43) unter einem Sitz (20) angeordnet ist, eine Schwingentyp-Motoreinheit (25) mit einem Motor (35) und einem damit integrierten Getriebe (36) in einem unteren Fahrzeugbereich unterhalb des Gepäckkastens (34) angeordnet ist, und ein Kraftstofftank (45) in dem unteren Fahrzeugbereich vorder Motoreinheit (25) angeordnet ist, und ein Kanister (56), der vorübergehend ein in dem Kraftstofftank (45) erzeugtes Kraftstoffverdampfungsgas sammelt und dieses dann einer einen Teil des Motors (25) bildenden Seite einer Zylinderanordnung (34) zuleitet, angeordnet ist, um dadurch das Kraftstoffverdampfungsgas zu steuern, wobei der Kanister (56) vor der Zylinderanordnung (34) und oberhalb eines hinteren Bereichs des Kraftstofftanks (45) angeordnet ist,
**dadurch gekennzeichnet, dass** ein Brückenelement (31) so angeordnet ist, dass es eine Brücke zwischen paarweisen Rahmenrohren (28) bildet, die getrennt voneinander in Fahrzeug-Breitenrichtung angeordnet sind und auf ihrer Oberseite ein Sattelscharnier als Sattelträgerelement lagern, welches einen vorderen Endbereich des Sattels (20) trägt, und der Kanister (56) an einer Unterseite des Brückenelements (31) angebracht ist.

2. Motorroller (10) nach Anspruch 1, bei dem das Brückenelement (31) eine Kastenform aufweist, die sich zur Unterseite hin öffnet, und der Kanister (56) an einer Unterseite des Brückenelements (31) in einem Zustand angebracht ist, in welchem der Kanister (56) innerhalb des Brückenelements (31) gehäust ist.

3. Motorroller (10) nach Anspruch 2, bei dem der Gepäckkasten (43) und das Sattelträgerelement an einer Oberseite des Brückenelements (31) angebracht sind.

4. Motorroller (10) nach Anspruch 1, bei dem die Zylinderanordnung (34) des Motors (35) sich von einem Motorgehäuse (33) in im Wesentlichen horizontaler Richtung erstreckt, und eine Luft-Kraftstoffgemisch-Zuführeinrichtung (48), die ein Luft-Kraftstoffgemisch der Zylinderanordnung (34) zuleitet, oberhalb der Zylinderanordnung (34) angeordnet ist, und der Kanister (56) sowohl mit der Luft-Kraftstoffgemisch-Zuführeinrichtung (48) als auch mit dem Kraftstofftank (45) verbunden ist.

5. Motorroller nach Anspruch 4, bei dem die Motoreinheit (25) in vertikal schwingfähiger Weise in Bezug auf eine Schwenkwelle (41) aufgehängt ist, wobei Letztere an einem oberen Bereich des Motorgehäuses (33) vorgesehen ist, die Luft-Kraftstoffgemisch-Zuführeinrichtung (48) nahe einer Frontseite der Schwenkwelle (41) in einer Fahrzeug-Seitenansicht angeordnet ist, und der Kanister (56) in etwa der gleichen Höhe angeordnet ist wie die Luft-Kraftstoffgemisch-Zuführeinrichtung (48).

## Revendications

1. Motocycle de type scooter (10), dans lequel un coffre de stockage (43), lequel stocke un article, est disposé sous un siège (20) ; un groupe moteur de type unité oscillante (25) présentant un moteur (35) et un dispositif de transmission de puissance (36) d'un seul tenant est monté sur une portion inférieure de véhicule au-dessous du coffre de stockage d'article (43), et un réservoir de carburant (45) est disposé sur la portion inférieure de véhicule devant le groupe moteur (25), et un absorbeur (56), lequel recueille temporairement un gaz d'évaporation de carburant généré dans le réservoir de carburant (45) et fournit ensuite le gaz d'évaporation de carburant à un côté d'ensemble de cylindre (34) constituant une partie du moteur (25), est disposé de manière à commander ainsi le gaz d'évaporation de carburant, dans lequel l'absorbeur (56) est agencé devant l'ensemble de cylindre (34) et au-dessus d'une portion arrière du réservoir de carburant (45),
**caractérisé en ce qu'**un élément de pontage (31) est disposé de manière à former un pont entre une paire de conduits de cadre (28) prévus séparément l'un de l'autre dans une direction de largeur de véhicule et à supporter sur sa surface supérieure une charnière de siège (44) comme élément de support de siège supportant une portion d'extrémité avant du siège (20), et l'absorbeur (56) est monté sur une surface inférieure de l'élément de pontage (31).

2. Motocycle de type scooter (10), selon la revendication 1, dans lequel l'élément de pontage (31) présente une forme de coffre qui s'ouvre vers le côté inférieur, et
l'absorbeur (56) est monté sur une surface inférieure de l'élément de pontage (31) dans un état où l'absorbeur (56) est logé dans l'élément de pontage (31).

3. Motocycle de type scooter (10) selon la revendication 2, dans lequel le coffre de stockage d'article (43) et l'élément de support de siège sont montés sur une surface supérieure de l'élément de pontage (31).

4. Motocycle de type scooter (10) selon la revendication 1, dans lequel l'ensemble de cylindre (34) du moteur (35) s'étend vers l'avant à partir d'un carter de moteur (33) dans une direction en grande partie horizontale ; un dispositif d'alimentation en mélange air/carburant (48), lequel fournit un mélange air/carburant à l'ensemble de cylindre (34), est agencé au-dessus de l'ensemble de cylindre (34), et l'absorbeur (56) est raccordé à la fois au dispositif d'alimentation en mélange air/carburant (48) et au réservoir de carburant (45).

5. Motocycle de type scooter (10) selon la revendication 4, dans lequel le groupe moteur (25) est suspendu d'une manière permettant une oscillation verticale autour d'un axe de pivot (41), lequel est fourni sur une portion supérieure du carter de moteur (33), et le dispositif d'alimentation en mélange air/carburant (48) est agencé à proximité d'un côté avant de l'axe de pivot (41) dans une vue de profil de véhicule, et l'absorbeur (56) est agencé à pratiquement la même hauteur que le dispositif d'alimentation en mélange air/carburant (48).
